(19) Europäisches Patentamt
European Patent Office
Office européen des brevets

(11) Publication number: **0 224 351**
**A1**

(12) **EUROPEAN PATENT APPLICATION**

(21) Application number: 86308657.5

(22) Date of filing: 06.11.86

(51) Int. Cl.⁴: **G 01 V 5/06**
G 01 T 1/40

(30) Priority: 22.11.85 US 800926

(43) Date of publication of application:
03.06.87 Bulletin 87/23

(84) Designated Contracting States: DE FR GB NL

(71) Applicant: **MOBIL OIL CORPORATION**
**150 East 42nd Street**
**New York New York 10017 (US)**

(72) Inventor: **Dion, Eric Paul**
**4213 Rosser Square**
**Dallas Texas 75244 (US)**

(74) Representative: **Cooper, John Anthony et al**
**Mobil Court 3 Clements Inn**
**London WC2A 2EB (GB)**

(54) **A gamma-ray logging system.**

(57) In a natural gamma-ray logging system gain stabilization is effected by providing a source (13) of light pulses that are comparable to gamma-ray scintillations but of higher energy than the natural gamma radiation. In addition, the system include a spectrum stabilizer (17) which compares the light pulse peak with a gain reference peak and adjusts the gain of the system in response to said comparison.

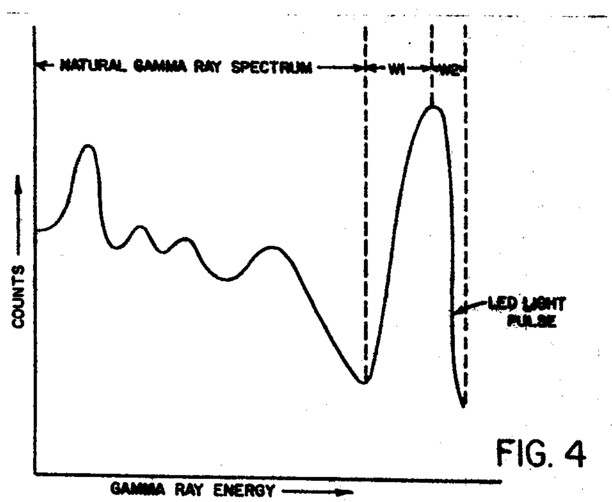


FIG. 4

EP 0 224 351 A1

**Description**

## A GAMMA-RAY LOGGING SYSTEM

This invention relates to a system for measuring the natural gamma radiation of surface and subsurface formations.

Various methods and apparatus have been utilized in the well logging art to study the radioactive properties of subsurface formations, both where the radioactivity is natural and where it is artificially induced. Logs of such properties aid in the study of the nature of the subsurface formations, particularly in exploration for minerals and hydrocarbon deposits. Certain elements in the subsurface formations exhibit distinctive properties which are measurable in situ. Of the many elements that occur, potassium (K), uranium (U), and thorium (Th) are important natural sources of gamma radiation. Each of these elements either contains, or radioactively decays to, radioactive isotopes which emit gamma radiation at characteristic energy levels. The natural gamma-ray spectrum of a given formation, therefore, exhibits peaks of intensity at energies corresponding to the potassium, uranium, and thorium content of the formation.

U.S. Patent No. 3,940,610 discloses a borehole logging system which employs a gamma-ray detector for measuring the total natural gamma radiation within the borehole. Three energy band selectors discriminate this measurement of the gamma-ray detector into potassium, uranium, and thorium energy band signals centered about the energy levels at which potassium, uranium, and thorium exhibit peak gamma radiation intensities.

These potassium, uranium, and thorium energy band signals are then applied to a stripping unit having potassium and uranium channels. The potassium channel strips the potassium gamma radiation measurement, as represented by the potassium energy band signal, of the influence from the gamma radiation from uranium and thorium. Further, the uranium channel strips the uranium gamma radiation measurement, as represented by the uranium energy band signal, of the influence from the gamma radiation from thorium.

For a further discussion on the applications of field gamma-ray spectrometry as a geological mapping and exploration tool, reference may be had to an article entitled "Techniques of Field Gamma-ray Spectrometry" in the Mineralogical Magazine, December, 1981, Vol. 44.

The present invention is directed to a gamma-ray logging system comprising:

a) a gamma-ray detector for measuring natural gamma radiation of formations surrounding a borehole;

b) a light source for producing light pulses comparable to gamma-ray scintillations but of higher energy than said natural gamma radiation;

c) means for providing a total energy spectrum signal representative of the energies of said natural gamma radiation and said light pulses; and

d)means for comparing said energy spectrum signal to a gain reference peak and adjusting said energy spectrum signal with respect to said gain reference peak to maintain gain stabilization.

In the accompanying drawings, FIG. 1 is a diagrammatic illustration of a borehole logging system useful in recording natural gamma-ray spectral energy from subsurface formations surrounding a borehole;

FIG. 2 is a graphical representation of the relationship of gamma-ray energy to channel number for a pulse height spectrum of natural gamma radiation recorded by the borehole logging system of FIG. 1.

FIG. 3 is a block diagram of the downhole natural gamma radiation measuring portion of the borehole logging system of FIG. 1 including gain stabilization circuitry according to one example of the present invention; and

FIG. 4 is a graphical representation of the gamma ray energy spectrum over which the gain stabilization of said one example is carried out.

Referring to the drawings, a natural gamma radiation borehole logging system of the type disclosed in the aforementioned U.S. Pat. No. 3,940,610 is illustrated in FIG. 1. This system measures the intensity of gamma-rays from a subsurface formation 6 as a function of their energy. The borehole tool 5 includes a gamma-ray detector 7 and an amplifier 8. The gamma-ray detector 7 preferably includes a scintillation-type detector 10 (e.g., a crystal of sodium iodide activated with thallium) which cooperates with a photomultiplier tube 11 to detect the natural gamma radiation. The sodium iodide gives off quanta of light energy called photons, the intensity of which is proportional to the energy of the gamma-ray interaction in the sodium iodide crystal. The photomultiplier tube responds to these photons to produce a succession of pulses having magnitudes proportional to the energy of the gamma-rays. These pulses are sent uphole by way of the amplifier 8 and a logging cable 9 to a recorder 4. The recorded gamma-ray pulse height spectrum reflects the number of incident gamma-rays detected per potassium, uranium or thorium channel. These channels are linearly related to gamma-ray energy, as illustrated in FIG. 2. The stability of the pulse height spectrum depends on two parameters remaining constant, these parameters being the zero energy offset and the gain of the gamma-ray detector and its associated borehole tool electronics. The present invention is directed to a method for the stabilization of the gain parameter.

Gain drift causes a shift in the energy calibration slope of the pulse height spectrum. Gain changes will shift both the absolute as well as relative position of peaks in the spectrum. Gain often changes as a function of the borehole temperature. As in the case of variation of the zero energy offset, gain drift results in poor spectral resolution and erroneous quantitative estimates made therefrom.

Referring now to FIG. 3, there is illustrated a

also receives light pulses from a light emitting diode (LED) 13 powered by an LED driver 12. Such LED light pulses are comparable to high-energy gamma-ray scintillations and are used for system gain stabilization. The analog output of photomultiplier 11 is amplified by the amplifier 8 and converted to a digital signal by an analog-to-digital converter (ADC) 16. A spectrum stabilizer 17 senses the position of the reference system gain peaks in the digital signal. The spectrum analyzer, by way of feedback, passes a signal to the ADC 16 to adjust such system gain as necessary to maintain stabilization. The digital signal, representing the pulse height spectrum, compensated for system gain instabilities, is then applied to a multichannel analyzer 18. The multichannel analyzer 18 records the entire gamma-ray spectrum from 200 KEV to 3.5 MEV. Gamma-ray peaks from the naturally occurring radiations of potassium, uranium and thorium channels are centered about 1.46 MEV, 1.76 MEV, and 2.62 MEV, respectively. The digitized, full pulse height spectra are then telemetered from multichannel analyzer 18 uphole where the full spectra are recorded by recorder 4.

The operation of the spectrum stabilizer 17 in correcting gain drift will now be described in detail. Gain drift, which causes a shift in the energy calibration slope factor of a given spectrum, is expressed as a percentage of the number of channels shifted from a particular channel location. The reference point for selecting gain stabilization should be selected from one of the higher numbered channels.

Spectrum stabilizer 17 monitors the position of the high-energy LED light pulse peak in the energy spectrum for the purpose of gain stabilization. The energy of the LED light pulse is chosen such that the high-energy LED peak does not interfere with the natural gamma-ray spectrum as shown in FIG. 4. A comparator 32 compares the events detected in windows W1 and W2 set immediately above and below a high-energy, gain reference peak channel, or gain control, with the gain reference peak. Such windows W1 and W2 are shown in FIG. 4 on either side of the LED high-energy light pulse peak. When a change in the position of the high-energy peak in the measured energy spectrum with respect to the gain reference peak is sensed, a signal is provided by a digital-to-anologue converter (DAC) 33 to the ADC 16 to adjust the gain until this peak is positioned properly.

The LED 13 provides the high-energy reference peak in the highest portion of the gamma-ray spectrum in lieu of an actual gamma-ray source, since a gamma-ray source would also provide gamma-ray scattering to lower energies, thereby interfering with the gamma-ray region under investigation. The intensity of the LED 13 is varied to adjust the location of the high-energy reference peak in the

voltages to the ADC 16 when peak shifting is sensed. By monitoring the ADC 16 output and providing the necessary correction voltages, the spectrum stabilizer 17 provides a closed loop servo system capable of providing drift-free operation of the gain of the gamma-ray logging system.

## Claims

1. A gamma-ray logging system, comprising:
   a) a gamma-ray detector for measuring natural gamma radiation of formations surrounding a borehole,
   b) a light source for producing light pulses comparable to gamma-ray scintillations but of higher energy than said natural gamma radiation,
   c) means for providing a total energy spectrum signal representative of the energies of said natural gamma radiation and said light pulses, and
   d) means for comparing said energy spectrum signal to a gain reference peak and adjusting said energy spectrum signal with respect to said gain reference peak to maintain gain stabilization.

2. The system of claim 1 wherein said comparing means compares the position in the energy spectrum of the light pulse peak with that of said gain reference peak and gain adjustment means adjusts the gain of the system in response to any difference in position of said peaks.



BAD ORIGINAL

14·11·86

0224351

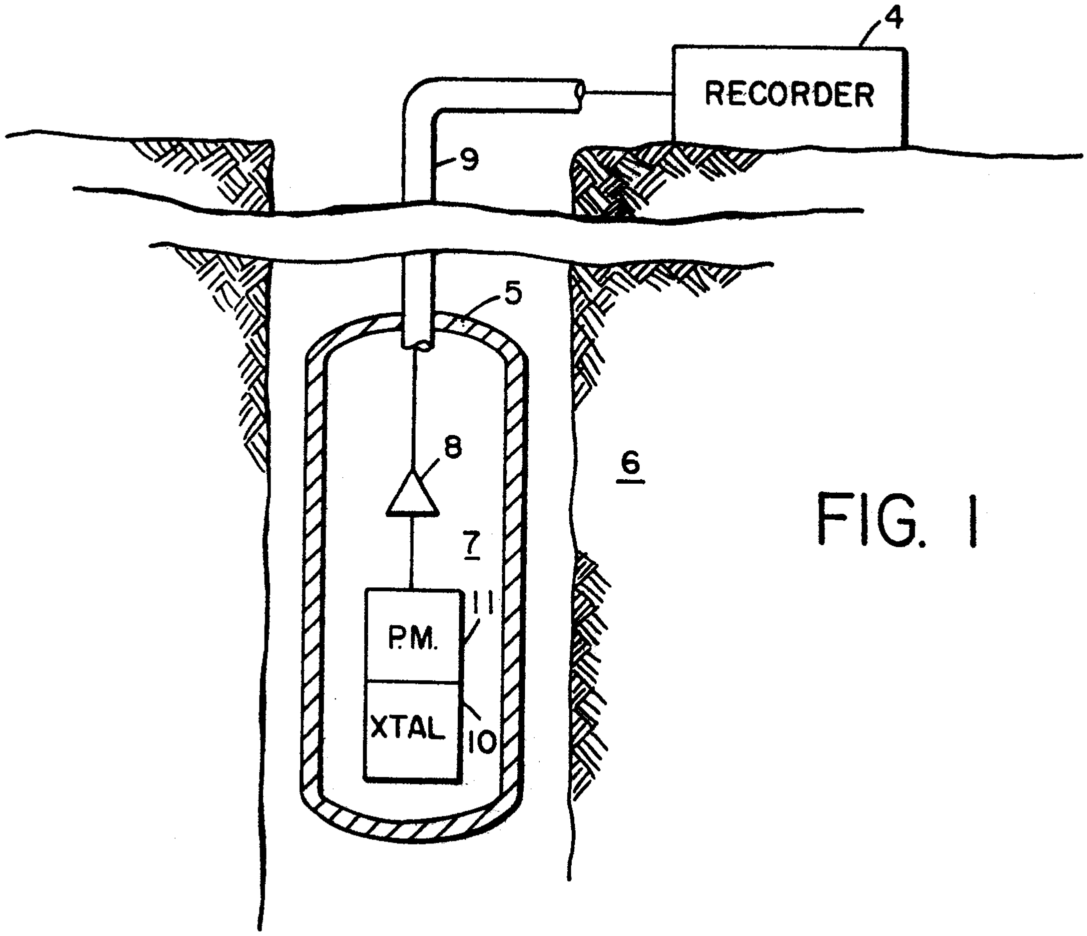


FIG. 1

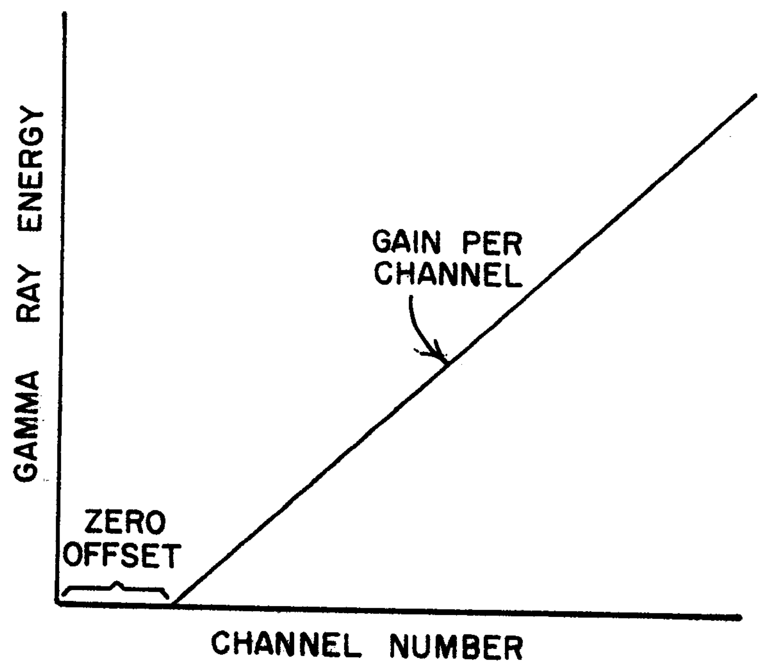


FIG. 2

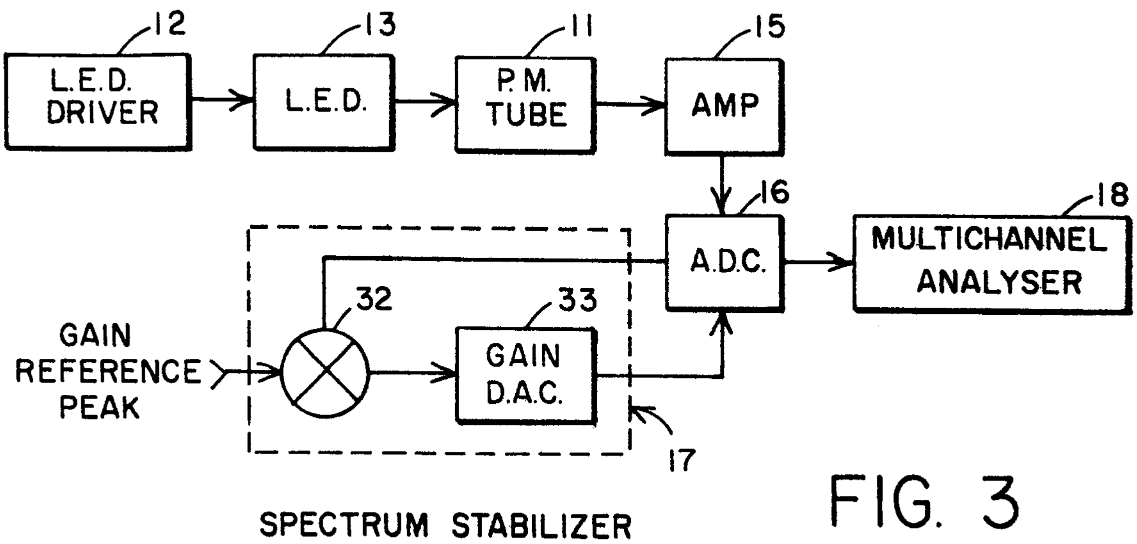
L.E.D. DRIVER
12
L.E.D.
13
P.M. TUBE
11
AMP
15
A.D.C.
16
MULTICHANNEL ANALYSER
18
GAIN REFERENCE PEAK
32
GAIN D.A.C.
33
17
SPECTRUM STABILIZER

FIG. 3

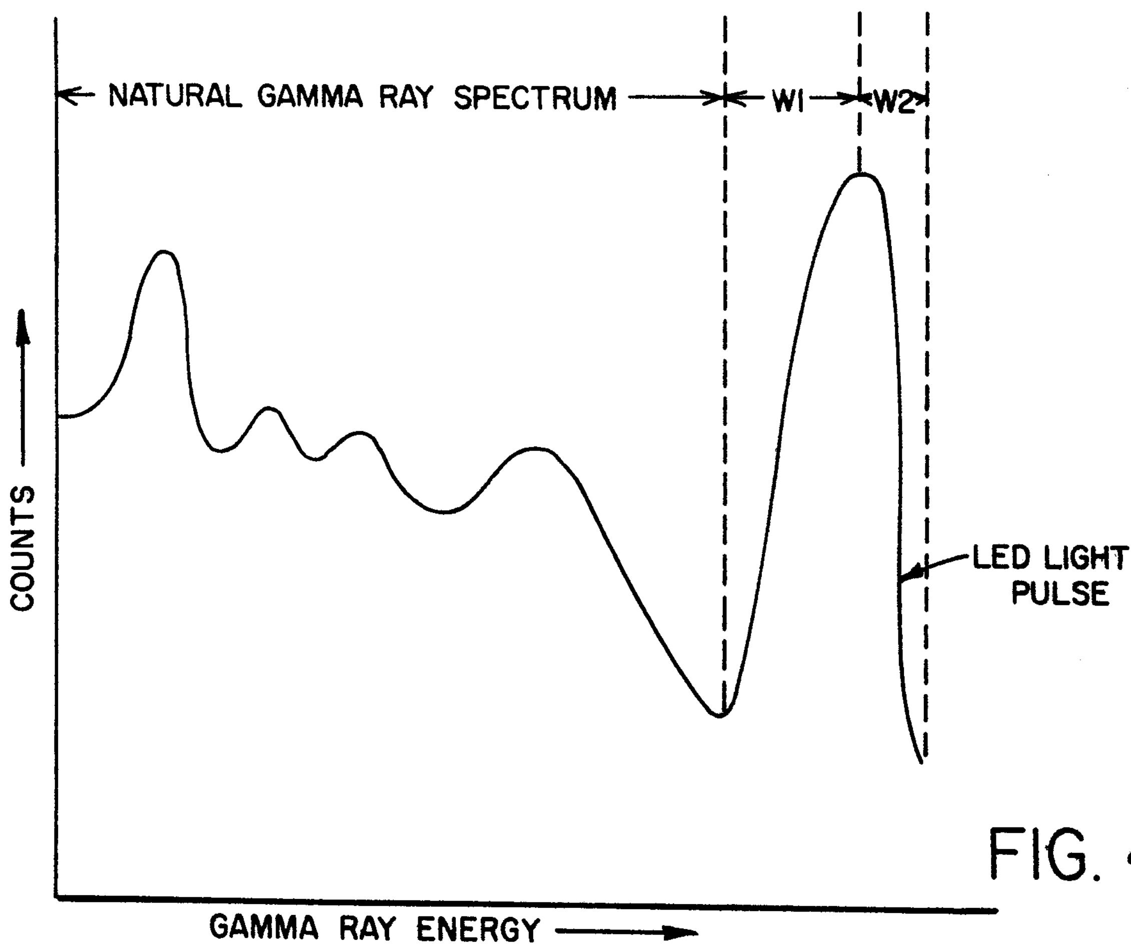
NATURAL GAMMA RAY SPECTRUM
W1
W2
COUNTS
LED LIGHT PULSE
GAMMA RAY ENERGY

FIG. 4

European Patent Office

# EUROPEAN SEARCH REPORT

Application number

EP 86 30 8657

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | IEEE TRANSACTIONS ON NUCLEAR SCIENCE, vol. NS-26, no. 1, February 1979, pages 395-397, New York, US; D.C. STROMSWOLD et al.: "Gamma-ray spectrum stabilization in a borehole probe using a light emitting diode" * Page 395, abstract; page 395, column 2, paragraphs 2,3; figures 1,4 * --- | 1,2 | G 01 V 5/06<br>G 01 T 1/40 |
| Y | INSTRUMENTS AND EXPERIMENTAL TECHNIQUES, vol. 27, no. 6, part 1, November-December 1984, pages 1382-1385, Plenum Publishing Corporation, New York, US; V.V. REMEIKIS: "Digital stabilization of multichannel gamma spectrometer" * Pages 1382,1383 * --- | 1,2 | TECHNICAL FIELDS SEARCHED (Int. Cl.4) |
| P,X | US-A-4 580 048 (E.P. DION) * Abstract; column 2, lines 28-64; column 3, lines 1-6; figures * ----- | 1,2 | G 01 V<br>G 01 T |

The present search report has been drawn up for all claims

| Place of search | Date of completion of the search | Examiner |
|---|---|---|
| THE HAGUE | 25-02-1987 | DATTA S. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document